# EUROPÄISCHE PATENTANMELDUNG

(11) **EP 3 957 451 A1**
(43) Veröffentlichungstag der Anmeldung: **23.02.2022**
(21) Anmeldenummer: 20191325.8
(22) Anmeldetag: 17.08.2020
(51) Int. Cl.: B28D 1/14, B28D 1/04, B28D 7/00, B23B 35/00, B23B 47/26

(54) **VERFAHREN ZUM VERBESSERTEN ANBOHREN MIT EINEM BOHRGERÄT IN EINEM BESTEHENDEN BOHRLOCH UND BOHRSYSTEM**

(71) Anmelder: Hilti Aktiengesellschaft, 9494 Schaan (LI)
(72) Erfinder: Drexl, Tobias, 86947 Weil (DE)
(74) Vertreter: Hilti Aktiengesellschaft Corporate Intellectual Property

(57) **Zusammenfassung**

Die vorliegende Erfindung betrifft ein Verfahren zum verbesserten Anbohren mit einem Bohrgerät in einem bestehenden Bohrloch. Das Bohrgerät umfasst kann in einem ersten und in einem zweiten Betriebszustand betrieben werden, wobei ein Umschalten zwischen den Betriebszuständen in Abhängigkeit von einem Vergleich zwischen Reibungsdaten und in Abhängigkeit von einer Bewegungsrichtung des Bohrgeräts erfolgen kann. In einem zweiten Aspekt betrifft die Erfindung ein Bohrsystem, das ein Bohrgerät und eine Autofeedvorrichtung zur Erzeugung eines Vorschubs für das Bohrgerät umfasst. Das Bohrsystem und vorzugsweise dazu eingerichtet, das vorgeschlagene Anbohr-Verfahren umzusetzen. Es ist ferner dazu ausgestaltet, dass ein Umschalten zwischen dem ersten Betriebszustand und dem zweiten Betriebszustand durch einen Vergleich zwischen einem Istwert eines Reibungsmoments und einem Referenzwert in Verbindung mit einer Ermittlung einer Bewegungsrichtung des Bohrgeräts erfolgt.

## Beschreibung

Die vorliegende Erfindung betrifft ein Verfahren zum verbesserten Anbohren mit einem Bohrgerät in einem bestehenden Bohrloch. Das Bohrgerät kann in einem ersten und in einem zweiten Betriebszustand betrieben werden, wobei ein Umschalten zwischen den Betriebszuständen in Abhängigkeit von einem Vergleich zwischen Reibungsdaten und in Abhängigkeit von einer Bewegungsrichtung des Bohrgeräts erfolgen kann. In einem zweiten Aspekt betrifft die Erfindung ein Bohrsystem, das ein Bohrgerät und eine Autofeedvorrichtung zur Erzeugung eines Vorschubs für das Bohrgerät umfasst. Das Bohrsystem ist vorzugsweise dazu eingerichtet, das vorgeschlagene Anbohr-Verfahren umzusetzen. Es ist ferner dazu ausgestaltet, dass ein Umschalten zwischen dem ersten Betriebszustand und dem zweiten Betriebszustand durch einen Vergleich zwischen einem Istwert eines Reibungsmoments und einem Referenzwert in Verbindung mit einer Ermittlung einer Bewegungsrichtung des Bohrgeräts erfolgt.

### Hintergrund der Erfindung:

Im Stand der Technik sind Werkzeugmaschinen bekannt, die mit einer Autofeedvorrichtung ausgestattet sind bzw. mit einer solchen zusammenarbeiten. Ein System aus Werkzeugmaschine und Autofeedvorrichtung wird im Sinne der Erfindung bevorzugt als Bohrsystem bezeichnet. Eine Autofeedvorrichtung ist vorzugsweise dazu eingerichtet, eine Vorwärtsbewegung der Werkzeugmaschine zu bewirken bzw. eine solche Vorwärtsbewegung zu steuern. Dazu kann ein von der Autofeedvorrichtung erzeugter Vorschub auf die Werkzeugmaschine übertragen werden, so dass die Werkzeugmaschine weiter in den zu bearbeitenden Untergrund hineingetrieben wird.

Bei der Steuerung der Vorwärtsbewegung der Werkzeugmaschine in den Untergrund hinein werden an der Werkzeugmaschine und/oder an der Autofeedvorrichtung Steuereinrichtungen eingesetzt. Diese Steuereinrichtungen konventioneller Bohrsysteme, wie sie aus dem Stand der Technik bekannt sind, arbeiten üblicherweise mit einem Soll-Ist-Vergleich zwischen einer Referenzgröße und einer tatsächlich anliegende, d.h. ermittelbaren Messgröße. Bei der Referenzgröße kann es sich zum Beispiel um das Drehmoment des Motors der Werkzeugmaschine handeln.

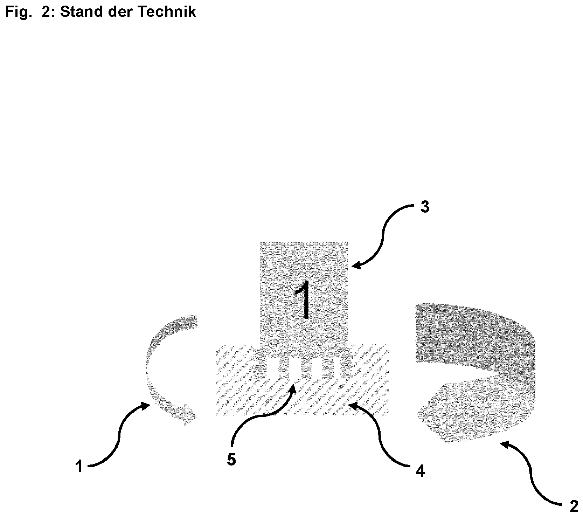

Dabei kann beispielsweise die Situation auftreten, dass der gemessene Wert des Drehmoments ("Meßgröße") größer ist als der Referenzwert, d.h. das Referenzmoment. Wenn die Steuereinrichtung des Bohrgeräts eine solche Situation feststellt, wird üblicherweise veranlasst, dass die Werkzeugmaschine bzw. das Werkzeug der Werkzeugmaschine aus dem Bohrloch herausbewegt wird. Dies erfolgt insbesondere dann, wenn die Steuereinrichtung eine zur Bohrrichtung negative Drehzahl des Vorschubmotors ermittelt. Eine solche Situation tritt häufig dann auf, wenn ein Bohrvorgang in einem Bohrloch gestartet werden soll; sie wird in Fig. 2 dargestellt.

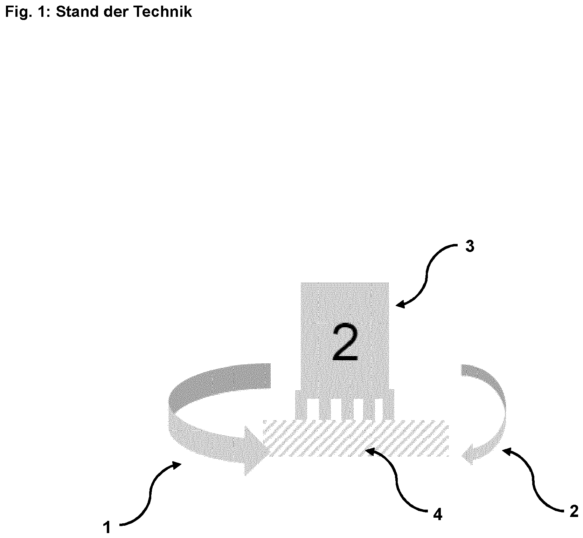

Das Referenzmoment für das Anbohren mit einer Anbohrdrehzahl am Bohrmotor, d.h. der Referenzwert für das Drehmoment, kann aber auch geringer sein als das Reibungsmoment beim "normalen" Anbohren mit einer "normalen" Anbohrdrehzahl. Insbesondere kann das Referenzmoment um ein Vielfaches kleiner ausfallen als das Reibungsmoment. Diese Situation tritt häufig auf, wenn eine Bohrkrone auf eine zu bearbeitende Oberfläche aufgesetzt wird, um einen (neuen) Bohrvorgang zu starten. Diese Situation wird im Sinne der Erfindung bevorzugt als "normales Anbohren" bezeichnet und in Fig. 1 dargestellt. Dabei ist das Reibungsmoment aufgrund der Wandreibung üblicherweise kleiner als das Referenzmoment. Die in Fig. 1 dargestellte Situation entspricht im Sinne der Erfindung vorzugsweise der Standard-Situation "Anbohren auf einer Oberfläche".

Die Größe der Momente zueinander wird in Fig. 1 schematisch durch die Größe der Pfeile verdeutlicht. Mit anderen Worten deuten die Größenverhältnisse der Pfeile in Fig. 1 schematisch die Größenverhältnisse der Momente zueinander an.

In dem Anwendungsfall "Anbohren auf einer Oberfläche" werden in der Regel gute Arbeitsergebnisse erzielt, weil die Steuereinrichtung der Werkzeugmaschine für den Betrieb in dieser Standard-Situation optimiert ist. Insbesondere kann in dieser Arbeitssituation des Bohrsystems durch einen entsprechenden Druck nach unten ein Abbau von Beton erzielt werden. Der Begriff "Druck nach unten" bedeutet im Sinne der Erfindung vorzugsweise, dass ein Vorschub in Richtung des zu vertiefenden Bohrlochs erzeugt wird. Mit anderen Worten ist damit vorzugsweise eine Bewegung oder ein Vorschub in Richtung des tiefsten Punktes des Bohrlochs gemeint. Dieser Vorschub wird vorzugsweise von der Autofeedvorrichtung erzeugt und auf die Werkzeugmaschine übertragen. Der Begriff "nach unten" entspricht im Sinne der Erfindung einer positiven Bewegungsrichtung des Bohrgeräts bzw. seines Werkzeugs, d.h. insbesondere der Bohrkrone.

Fig. 2 zeigt die zweite Standard-Situation, auf die konventionelle Bohrsysteme optimiert sein können, nämlich das "Bohren in einem bestehenden Bohrloch". In dieser Situation ist das Reibmoment aufgrund der Wandreibung üblicherweise größer als das Referenzmoment. Auch in Fig. 2 wird die Größe der Momente zueinander schematisch durch die Größe der Pfeile verdeutlicht. In dieser Situation ist eine Arbeit der Steuereinrichtung erschwert, da das Referenzmoment von der Messgröße nicht erreicht werden kann. Die Steuereinrichtung reagiert üblicherweise auf diese Situation, indem es das Bohrsystem solange entlastet, bis ein Zustand gemäß Fig. 1 wiederhergestellt ist. Eine Möglichkeit, eine Situation gemäß der Standard-Situation "Anbohren auf einer Oberfläche" herzustellen, besteht für die Steuereinrichtung darin, das Bohrgerät aus dem Bohrloch herauszufahren. Das Herausfahren des Bohrgeräts aus dem Bohrloch ist aber nicht gewünscht, da dadurch der Bohrvorgang nicht vorangetrieben und kein Abbau von Beton, Gestein oder Mauerwerk erreicht wird.

Es kommt in der Realität aber häufig vor, dass eine Bohrung in einem bereits bestehenden Bohrloch gestartet oder fortgeführt werden soll. Dabei steigt die Wandreibung des Werkzeugs der Werkzeugmaschine in Bezug auf die Bohrlochwand um ein Vielfaches an. Die beim Anbohren in bestehenden Bohrlöchern auftretende Reibung zwischen Bohrkrone und Bohrlochwand ist erheblich höher als beim Anbohren mit der Werkzeugmaschine auf einer Oberfläche. Dieser häufig auftretenden Bohrsituation kann mit konventionellen Bohrsystemen, die für die Verwendung in der Standard-Situation "Anbohren auf einer Oberfläche" optimiert ist, oft nur schlecht gerecht werden. Insbesondere sind die Parameter für das Anbohren, die in der Werkzeugmaschine für die Standard-Situationen hinterlegt sind, nicht geeignet, für ein Bohren in einem bestehenden Bohrloch. Dies kann beispielsweise dazu führen, dass das Reibmoment im Bohrloch für die Anbohrstufe zu hoch ist. Dadurch kann der Motor der Werkzeugmaschine "kippen", was zu einer Blockade der Werkzeugmaschine im Bohrloch führen kann. Insbesondere kann dadurch die Situation auftreten, dass beim Abbau von Beton kein Moment umgesetzt wird. Die beschriebene Situation führt bei konventionell arbeitenden Bohrsystemen zumeist dazu, dass aufgrund der Berechnung des Soll-Ist-Vergleichs das Bohrgerät bzw. das Bohrsystem aus dem Bohrloch herausbewegt bzw. herausgezogen wird. Ein solches Herausziehen wird aber von vielen Nutzern der Werkzeugmaschine als unbefriedigend empfunden.

Aufgabe der vorliegenden Erfindung ist es somit, die vorstehend beschriebene Nachteile und Mängel des Standes der Technik zu überwinden und eine verbesserte Steuerung für ein Bohrsystem anzugeben, mit dem nicht nur in einer Standard-Situation optimale Bohrergebnisse erzielt werden können, sondern insbesondere auch dann, wenn ein Bohrvorgang in einem bestehenden Bohrloch gestartet werden soll. Insbesondere soll ein Steuerungsverfahren für ein Bohrsystem bereitgestellt werden, mit dem der Beginn eines Bohrvorgangs in einem bestehenden Bohrloch verbessert werden soll. Ferner soll ein Bohrsystem umfassend ein Bohrgerät und eine Autofeedvorrichtung bereitgestellt werden, mit dem das verbesserte Steuerungsverfahren umgesetzt werden kann.

Die Aufgabe wird durch den Gegenstand der unabhängigen Ansprüche gelöst. Vorteilhafte Ausführungsformen zu dem Gegenstand der unabhängigen Ansprüche finden sich in den abhängigen Unteransprüchen.

### Beschreibung der Erfindung:

Die Aufgabe wird gelöst durch ein Verfahren zum verbesserten Anbohren mit einem Bohrgerät in einem bestehenden Bohrloch, wobei das Bohrgerät eine Autofeedvorrichtung zur Erzeugung eines Vorschubs für das Bohrgerät umfasst und wobei das Bohrgerät in einem ersten und in einem zweiten Betriebszustand betrieben werden kann. Das Verfahren ist durch folgende Verfahrensschritte gekennzeichnet:
a) Bereitstellung des Bohrgeräts, wobei in dem Bohrgerät ein Referenzwert für ein Drehmoment bei einem Betrieb des Bohrgeräts in dem ersten Betriebszustand hinterlegt ist,
b) Betrieb des Bohrgeräts im ersten Betriebszustand,
c) Ermittlung eines Istwerts für die Reibung der Bohrkrone des Bohrgeräts in dem bestehenden Bohrloch,
d) Vergleich des Istwerts mit dem Referenzwert,
e) Ermittlung einer Bewegungsrichtung des Bohrgeräts in dem bestehenden Bohrloch, wobei die Bewegungsrichtung des Bohrgeräts von der Autofeedvorrichtung vorgegeben wird,
f) Beendigung des ersten Betriebszustands, wenn der Istwert höher ist als der Referenzwert und wenn die Bewegungsrichtung des Bohrgeräts negativ ist.

Es ist im Sinne der Erfindung bevorzugt, dass der erste Betriebszustand, der vorzugsweise auch als Anbohrstufe bezeichnet wird, der Situation gemäß Fig. 2 entspricht. Der Betriebszustand des Bohrgeräts wird in den Figuren vorzugsweise durch die große Zahl in der Bohrkrone dargestellt. In Figur 2 wird vorzugsweise diejenige Situation dargestellt, dass der Bohrvorgang in einem bestehenden Bohrloch gestartet wird. Es ist im Sinne der Erfindung bevorzugt, dass die Formulierung "Beginn eines Bohrvorgangs» und der Begriff «Anbohren» im Kontext der vorliegenden Erfindung synonym verwendet werden. Vorzugsweise kann das vorgeschlagene Anbohr-Verfahren auch als «Verfahren zur Steuerung eines Bohrvorgangs in einem bestehenden Bohrloch" bezeichnet werden. Vorzugsweise entspricht der zweite Betriebszustand der Situation, die in Fig. 1 dargestellt wird, dem "Anbohren auf einer Oberfläche". Mit anderen Worten ist es im Sinne der Erfindung bevorzugt, dass der erste Betriebszustand einer Anbohrphase oder Anbohrstufe des Bohrgeräts entspricht und der zweite Betriebszustand einer Bohrphase des Bohrgeräts.

Es ist im Sinne der Erfindung bevorzugt, dass mit dem Begriff "Referenzwert für das Drehmoment" der Referenzwert für das Drehmoment an der Bohrkrone des Bohrgeräts gemeint ist. Der Referenzwert für das Drehmoment wird im Sinne der Erfindung bevorzugt auch als Referenzmoment bezeichnet. Mit anderen Worten kann wird gemäß Verfahrensschritt a) ein Bohrgerät bereitgestellt, in dem ein Referenzwert für ein Drehmoment an der Bohrkrone des Bohrgeräts hinterlegt ist, wodurch das Referenzmoment für das vorgeschlagenen Verfahren bereitgestellt wird. Dieses Referenzmoment kann gemäß einem nachfolgenden Verfahrensschritt mit einem Istwert der Reibung der Bohrkrone verglichen werden. Dieser Istwert der Reibung der Bohrkrone wird im Sinne der Erfindung bevorzugt als "Reibmoment" oder "Istmoment" bezeichnet. Es ist im Sinne der Erfindung bevorzugt, dass das Reibmoment als Reibung der Bohrkrone des Bohrgeräts als Meßgröße in dem bestehenden Bohrloch ermittelt wird.

Im Kontext der vorliegenden Erfindung kann im Bohrmotor eine Messeinrichtung vorgesehen sein, mit der vorzugsweise der Strom, der durch den Motor fließt, gemessen wird. Diese Messeinrichtung kann beispielsweise als Shunt ausgebildet sein. Der Strom, der von der Messeinrichtung gemessen wird, ist vorzugsweise proportional zum aktuellen Drehmoment. Wenn nun bei der Messung festgestellt wird, dass trotz einer Entlastung das Istmoment nicht sinkt, so kann daraus gefolgert werden, dass es sich um ein Reibmoment handelt.

In einem späteren Verfahrensschritt ist es bevorzugt, dass eine Bewegungsrichtung des Bohrgeräts in dem bestehenden Bohrloch ermittelt wird. Dazu können beispielsweise die Hall-Signale des Motors verwendet werden. Insbesondere können die Hall-Signale des Motors in der Vorschubeinrichtung dazu verwendet werden, die Drehrichtung zu ermitteln. Dazu kann zusätzlich ein Inkrementalgeber zum Einsatz kommen. Wenn beispielsweise ein Inkrement gemessen wird, kann dies dahingehend interpretiert werden, dass sich das Bohrgerät ins Bohrloch hineinbewegt, während ein Dekrement bedeuten kann, dass das Bohrgerät aus dem Bohrloch herausbewegt wird.

Vorzugsweise wird die Bewegungsrichtung in Bezug auf ihre Richtung und/oder in Bezug auf ihren Betrag oder Wert ermittelt. Mit anderen Worten wird eine konkrete Raumrichtung, in die sich das Bohrgerät bewegt, ermittelt, sowie die Geschwindigkeit, mit der sich das Bohrgerät in dem bestehenden Bohrloch bewegt. Vorzugweise ist die Bewegung des Bohrgeräts auf zwei Raumrichtungen beschränkt. Das Bohrgerät kann sich in dem bestehenden Bohrloch insbesondere in die Raumrichtung "nach oben" bewegen oder in die Raumrichtung "nach unten". Diese Bewegungen werden im Sinne der Erfindung als negative (Raumrichtung "nach oben") bzw. positive (Raumrichtung "nach unten") Bewegungsrichtung bezeichnet. Die Bewegung des Bohrgeräts wird vorzugsweise von der Autofeedvorrichtung des Bohrsystems gesteuert bzw. bewirkt. Es ist im Sinne der Erfindung bevorzugt, dass sowohl Werkzeugmaschine, als auch Autofeedvorrichtung über jeweils einen Motor verfügen, wobei der Motor der Werkzeugmaschine im Sinne der Erfindung vorzugsweise auch als "Bohrmotor" bezeichnet wird, während der Motor der Autofeedvorrichtung vorzugsweise auch als "Vorschubmotor" bezeichnet wird. Die Steuerung der Bewegung des Bohrgeräts durch die Autofeedvorrichtung geschieht beispielsweise dadurch, dass ein Vorschub, der mit dem Feedmotor erzeugt wird, auf das Bohrgerät und/oder sein Werkzeug übertragen wird.

Die bisher beschriebenen Verfahrensschritte finden insbesondere im ersten Betriebszustand des Bohrgeräts statt, d.h. im Sinne der Erfindung bevorzugt beim Bohren in einem bestehenden Bohrloch bzw. wenn ein Bohrvorgang in einem bestehenden Bohrloch gestartet werden soll. Es ist erfindungsgemäß vorgesehen, dass der erste Betriebszustand beendet wird, wenn der Istwert der Reibung der Bohrkrone höher ist als der Referenzwert des Drehmoments und wenn die Bewegungsrichtung des Bohrgeräts negativ ist, d.h. wenn sich das Bohrgerät aufgrund einer Veranlassung durch die Autofeedvorrichtung in dem bestehenden Bohrloch nach oben bewegt.

Es kann im Sinne der Erfindung bevorzugt sein, dass in einem Boden hineingebohrt wird. In diesem Fall sind die Formulierungen "Raumrichtung nach oben" oder "Raumrichtung nach unten" gut geeignet, um das Bohren und das Starten von Bohrvorgängen zu beschreiben. Insbesondere ist eine negative Bewegungsrichtung des Bohrgeräts dadurch definiert, dass das Bohrgerät aus dem Bohrloch herausgezogen wird, also dadurch, dass ein Abstand zwischen dem Boden oder dem Untergrund des Bohrlochs und dem Bohrgerät größer wird. Es ist im Sinne der Erfindung bevorzugt, dass die Begriffe "Boden des Bohrlochs" oder "Untergrund des Bohrlochs" mit dem tiefsten Punkt innerhalb des Bohrlochs korrespondieren. Es kann im Sinne der Erfindung jedoch auch bevorzugt sein, dass beispielsweise in einen Untergrund hineingebohrt wird, wobei der Untergrund eine Wand ist. Dann erfolgt der Bohrfortschritt vorzugsweise in eine Tiefe der Wand hinein. In diesem Anwendungsfall bedeutet die Formulierung "Raumrichtung nach unten", dass in die Wand hineingebohrt wird, insbesondere mit dem Ziel, das Bohrloch zu vertiefen. Die Formulierung "Raumrichtung nach oben" bedeutet in diesem Anwendungsfall, dass sich das Bohrgerät aus dem Bohrloch hinausbewegt, wobei die Bewegungen des Bohrgeräts im Bohrloch in diesem Anwendungsfall im Wesentlichen parallel zu einer Erdoberfläche erfolgen bzw. im Wesentlichen parallel zu dem Untergrund auf dem die Wand steht, in die gebohrt wird.

Es ist im Sinne der Erfindung bevorzugt, dass während des ersten Betriebszustands, der vorzugsweise auch als Anbohrstufe bezeichnet wird, insbesondere ein Vergleich zwischen Istwert und Referenzwert bzw. Reibungsmoment und Referenzmoment stattfindet. Der Vergleich des Istwerts mit dem Referenzwert ermöglicht vorteilhafterweise eine Regelung bzw. Einstellung des Drehmoments, mit dem die Bohrkrone arbeitet bzw. das an die Bohrkrone übertragen wird.

Der Grundgedanke, der der Erfindung zugrunde liegt, besteht darin, dass der Vergleich von Ist- und Referenzwert in Verbindung gebracht wird mit der Bewegung bzw. der Bewegungsrichtung des Bohrgeräts. Insbesondere ist es im Sinne der Erfindung bevorzugt, dass der Vergleich von Ist- und Referenzwert in Verbindung mit der Ermittlung der Bewegung bzw. der Bewegungsrichtung des Bohrgeräts erfolgt. Das Bohrgerät bewegt sich während des normalen Bohrbetriebs, der im Sinne der Erfindung bevorzugt als zweiter Betriebszustand bezeichnet wird, mit einer Bewegungsrichtung, die im Kontext der vorliegenden Erfindung bevorzugt als "positive Bewegungsrichtung" definiert wird. Bei dieser Bewegung handelt es sich vorzugsweise um die Bewegung des Bohrgeräts in das Bohrloch hinein, also in Richtung eines Bodens oder Untergrunds des Bohrlochs.

Insbesondere wird durch den Vergleich von Reibungsmoment und Referenzmoment in Verbindung mit der Ermittlung der Bewegungsrichtung des Bohrgeräts im Bohrloch eine verbesserte Steuerung des Anbohrvorgangs in einem bestehenden Bohrloch ermöglicht. Es ist im Sinne der Erfindung ganz besonders bevorzugt, dass durch den Vergleich von Reibungsmoment und Referenzmoment eine Regelung des Drehmoments der Bohrkrone bzw. des Bohrgeräts bereitgestellt wird. Diese Regelung kann beispielsweise abgeschaltet auch werden, insbesondere dann, wenn der erste Betriebszustand gemäß Verfahrensschritt f) des vorgeschlagenen Verfahrens beendet wird. Es wird in diesem Fall davon ausgegangen, dass das Anbohren in einem bestehenden Bohrloch erfolgt, so dass die Durchführung einer konventionellen Anbohrstufe, die nicht in einem bestehenden Bohrloch beginnt, nicht erforderlich ist. Insbesondere ermöglicht es der erfindungsgemäß vorgesehene Vergleich von Istwert und Referenzwert in Verbindung mit einer Betrachtung der Bewegungsrichtung des Bohrgeräts, dass das Bohrgerät vorzugsweise automatisch erkennen kann, ob der Bohrvorgang in einem bestehenden Bohrloch beginnt oder auf einem vorzugsweise planen Untergrund.

Bei dem Bohrgerät kann es sich insbesondere um eine Diamantwerkzeugmaschine handeln, insbesondere ein Kernbohrgerät, das dazu eingerichtet ist, zylinderförmige Bohrkerne zu erzeugen und aus einem zu bearbeitenden Untergrund herauszuschneiden. Das Werkzeug einer solchen Werkzeugmaschine, mit dem der Bohrkern erzeugt wird, wird im Sinne der Erfindung bevorzugt als Bohrkrone bezeichnet. Mit anderen Worten ist es im Sinne der Erfindung bevorzugt, dass das Bohrgerät eine Bohrkrone als Werkzeug umfasst.

Es ist im Sinne der Erfindung bevorzugt, dass das vorgeschlagene Verfahren den zusätzlichen Verfahrensschritt umfassen kann, dass nach Beendigung des ersten Betriebszustands das Bohrgerät tiefer in das Bohrloch hineingefahren wird. Eine Bewegung des Bohrgeräts "tiefer in das Bohrloch" hinein, entspricht im Sinne der Erfindung bevorzugt einer Bewegung in eine positive Bewegungsrichtung. Eine Bewegung des Bohrgeräts in eine positive Bewegungsrichtung wird im Sinne der Erfindung bevorzugt auch als ein weiteres oder tieferes "Einfahren des Bohrgeräts" in das Bohrloch bezeichnet. Vorzugsweise entspricht ein Herausziehen des Bohrgeräts aus dem Bohrloch einer Bewegung in eine negative Bewegungsrichtung. Diese Bewegung des Bohrgeräts in das Bohrloch hinein wird vorzugsweise von der Autofeedvorrichtung bewirkt bzw. gesteuert.

Es kann im Sinne der Erfindung bevorzugt sein, dass das Einfahren des Bohrgeräts in das Bohrloch mit einer konstanten Drehzahl eines Motors der Autofeedvorrichtung erfolgt. Ein wesentlicher Vorteil der Erfindung besteht darin, dass mit einer relativ langsamen, d.h. geringen Drehzahl des Vorschubmotors in das Bohrloch eingefahren wird, wobei bei einer Erhöhung des Drehmoments ein sanfter Übergang in einen geregelten Vorschubbetrieb ermöglicht wird.

Es ist im Sinne der Erfindung bevorzugt, dass in einem weiteren Vergleich Istwert und Referenzwert miteinander verglichen werden, wobei der Bohrvorgang im zweiten Betriebszustand fortgesetzt wird, wenn bei dem weiteren Vergleich ein vordefiniertes Verhältnis von Istwert zu Referenzwert festgestellt wird. Es wird dann davon ausgegangen, dass die Bohrkrone den eigentlich zu bearbeitenden Untergrund erreicht hat, so dass der Bohrvorgang in der normalen Bohrstufe fortgesetzt werden kann. Vorzugsweise wird bei diesem Vergleich der Referenzwert für das Drehmoment mit dem Istwert der Reibung der Bohrkrone, dem Reibmoment, verglichen. Es ist im Sinne der Erfindung bevorzugt, dass die Vergleiche zwischen Istwert und Referenzwert kontinuierlich stattfinden. Es kann aber auch bevorzugt sein, dass die Vergleiche punktuell stattfinden, beispielsweise mit festen zeitlichen Abständen oder ausgelöst durch verschiedene Ereignisse, die bei einem Bohrvorgang auftreten können. Das Gleiche gilt sinngemäß für die Ermittlung der Bewegungsrichtung des Bohrgeräts.

Es ist im Sinne der Erfindung bevorzugt, dass das Verhältnis zwischen Ist- und Referenzwert, bei dem der normale Bohrvorgang fortgesetzt wird, in einem Bereich von ca. 50 % liegt. Es sind allerdings auch viele andere Werte möglich, wie zum Beispiel 40 % oder 60 % oder 42 % oder 55 %. Vorzugsweise ist bei einem Verhältnis von 50 % zwischen Ist- und Referenzwert der Istwert gerade halb so groß wie der Referenzwert.

Es ist im Sinne der Erfindung bevorzugt, dass das System aus Bohrgerät und Autofeedvorrichtung nach Beendigung des ersten Betriebszustands mit einer fixen Drehzahl des Motors der Autofeedvorrichtung gesteuert wird. Diese Feedmotordrehzahl kann beispielsweise bei 150 *rounds perminute* (*rpm*) liegen. Es kann im Sinne der Erfindung jedoch auch bevorzugt sein, dass eine Steuerung des Bohrvorschubs nach Beendigung des ersten Betriebszustands mit einer fixen Vorschubgeschwindigkeit erfolgt. Diese Vorschubgeschwindigkeit wird vorzugsweise von der Autofeedvorrichtung bewirkt und auf das Bohrgerät übertragen. Die Richtung dieser Vorschubrichtung, mit der das Bohrgerät in das Bohrloch hineinbewegt wird, entspricht vorzugsweise einer positiven Bewegungsrichtung, d.h. einer Bewegung in das Bohrloch hinein. Wenn das Istmoment beispielsweise in einem Bereich von 50 % des Referenzwertes liegt, wird davon ausgegangen, dass das Werkzeug des Bohrgeräts auf den zu bearbeitenden Untergrund am Boden bzw. am tiefsten Punkt des Bohrlochs angekommen ist. Dort kann der Bohrvorgang vorzugsweise im zweiten Betriebszustand des Bohrgeräts fortgesetzt werden.

Das beschriebene Vorgehen ist mit dem Vorteil verbunden, dass dadurch ein zu schnelles Auffahren auf den zu bearbeitenden Untergrund vermieden wird. Das zu schnelle Auffahren auf den Boden des bestehenden Bohrlochs ist unerwünscht, weil es dadurch zu Beschädigungen an der Bohrkrone und/oder an dem Bohrgerät kommen kann. Bei konventionell arbeitenden Bohrgeräten kann das zu schnelle Auffahren der Bohrkrone auf den Untergrund insbesondere durch einen Sprung im Referenzmoment hervorgerufen werden. Solchen "Sprünge" im Referenzmoment werden durch die vorliegende Erfindung wirkungsvoll vermieden. Insbesondere wird durch die Erfindung ein verbessertes Anbohren mit einem Bohrgerät in bestehenden Bohrlöchern erreicht. Insbesondere wird mit dem Verfahren ein unerwünschtes Herausfahren des Bohrgeräts durch die Autofeedvorrichtung aus dem Bohrloch wirksam vermieden. Darüber hinaus haben Tests gezeigt, dass mit der Erfindung ein ruhiger arbeitender und vibrationsärmerer Bohrvorgang ermöglicht werden kann.

Es ist im Sinne der Erfindung bevorzugt, dass der erste Betriebszustand beendet wird, wenn der Istwert für eine vordefinierte Zeitspanne t höher ist als der Referenzwert. Diese vordefinierte Zeitspanne t kann beispielsweise 5 s betragen. Sie kann aber beispielsweise auch mehr oder weniger als 5 s betragen, z.B. 1 s, 10 s, 3 s, 7 s oder 12 s, 15 s, 18 s, 20 s, 25 s oder 30 s.

In einem weiteren Aspekt betrifft die Erfindung ein Bohrsystem, wobei das Bohrsystem ein Bohrgerät und eine Autofeedvorrichtung zur Erzeugung eines Vorschubs für das Bohrgerät umfasst, wobei das Bohrgerät in einem ersten und in einem zweiten Betriebszustand betreibbar ist. Das Bohrsystem ist dadurch gekennzeichnet, dass das System dazu ausgestaltet ist, dass eine Umstellung zwischen dem ersten Betriebszustand und dem zweiten Betriebszustand durch einen Vergleich zwischen einem Istwert eines Reibungsmoments und einem Referenzwert in Verbindung mit einer Ermittlung einer Bewegungsrichtung des Bohrgeräts erfolgt. Die Definitionen, technischen Wirkungen und Vorteile, die für das vorgeschlagene Verfahren beschrieben wurden, gelten für das Bohrsystem analog, und umgekehrt.

Es ist im Sinne der Erfindung bevorzugt, dass der erste Betriebszustand dann beendet wird, wenn der Istwert höher ist als der Referenzwert und wenn die Bewegungsrichtung des Bohrgeräts negativ ist.

Die Erfindung kann an folgendem Ausführungsbeispiel verdeutlicht werden: Es ist im Kontext der Erfindung ein Vergleich zwischen einem Istmoment und einem Referenzmoment vorgesehen, wobei das Referenzmoment vorzugsweise einem Referenzwert für das Drehmoment entspricht und das Istmoment dem Istwert der Reibung der Bohrkrone. Wenn das Istmoment währen des Anbohrens für eine gewisse Zeit (z.B. 5 s) höher ist als das Referenzmoment und wenn der Feedmotor aus dem Bohrloch herausfährt, so kann die Anbohrstufe automatisch beendet und die normale Bohrgeschwindigkeit des Bohrmotors gewählt werden. Zusätzlich kann die Regelung ausgeschaltet werden. Es wird davon ausgegangen, dass es sich um ein Anbohren in einem bereits bestehenden Bohrloch handelt.

Beispielsweise kann dann zugewartet werden, bis der Bohrmotor auf eine Nenndrehzahl gekommen ist und der zweite Betriebszustand erreicht wird, der vorzugsweise dem Standard-Anwendungsfall "Anbohren auf einer Oberfläche" entspricht. Dieser Standard-Anwendungsfall wird schematisch in Fig. 1 dargestellt.

Anschließend kann das Bohrsystem mit einer fixen Feedmotordrehzahl gesteuert werden. Beispielsweise kann eine Drehzahl des Feedmotors von 150 rpm oder eine Vorschubgeschwindigkeit von 0,1 mm/min eingestellt werden. Die Bewegung des Bohrgeräts erfolgt dabei vorzugsweise in die Raumrichtung "nach unten". Wenn das Istmoment z.B. 50% des Drehmomentes erreicht hat, wird davon ausgegangen, dass die Bohrkrone wieder auf dem eigentlichen Untergrund angekommen ist und die Bohrung fortgesetzt werden kann.

Dadurch wird ein zu schnelles Auffahren auf den Untergrund verhindert. Ein solches zu schnelles Auffahren auf den Untergrund kann unerwünschterweise aus dem plötzlichen Sprung im Referenzmoment bei konventionell arbeitenden Bohrsystem resultieren. Dabei kommt es zum Beispiel zu Sprüngen im Referenzmoment von 0,8 Nm auf 2,2 Nm.

Klemmt die Bohrkrone trotz der Umsetzung des vorgeschlagenen Verfahrens, so wird beispielsweise sofort 50 % des Referenzmomentes erreicht und die Regelung des Bohrsystems wird wieder eingeschaltet, so dass das System gemäß einem normalen Bohrvorgang weiterarbeiten kann.

Weitere Vorteile der Erfindung ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Darstellung eines Anbohrvorgangs auf einem Untergrund (zweiter Betriebszustand) - Stand der Technik
- Fig. 2: schematische Darstellung eines Anbohrvorgangs in einem bestehenden Bohrloch (erster Betriebszustand) - Stand der Technik
- Fig. 3: schematische Darstellung eines Bohrvorgangs in einem bestehenden Bohrloch gemäß einer möglichen Ausgestaltung des vorgeschlagenen Verfahrens

### Figurenbeschreibung und Ausführungsbeispiel:

Fig. 1 zeigt eine schematische Darstellung eines Anbohrvorgangs auf einem Untergrund (4), wie es aus dem Stand der Technik bekannt ist. Diese Situation wird im Sinne der Erfindung vorzugsweise auch als zweiter Betriebszustand des Bohrgeräts (3) bezeichnet. Dargestellt ist eine Bohrkrone als Bestandteil des Bohrgeräts (3), das auf einem im Wesentlichen planen bzw. ebenen Untergrund (4) aufgesetzt steht. Wenn in diesem Zustand ein Bohrvorgang mit dem Bohrgerät (3) gestartet werden soll, ist das Referenzmoment (1) üblicherweise größer als ein Reibmoment (2), wobei das Reibmoment (2) als Meßgröße vorzugsweise bei einem Betrieb des Bohrgeräts (3) gemessen wird. Die Größe der Momente (1, 2) zueinander wird in den Figuren schematisch durch die Größe der Pfeile verdeutlicht. Mit anderen Worten deuten die Größenverhältnisse der Pfeile in den Figuren schematisch die Größenverhältnisse zwischen Referenzmoment (1) und Reibmoment (2) an. Der Referenzwert (1) für die Reibung ist vorzugsweise in einer Steuereinrichtung des Bohrgeräts (3) hinterlegt. Der Referenzwert (1) kann auch in einer Steuereinrichtung einer Autofeedvorrichtung (nicht dargestellt) des Bohrgeräts (3) hinterlegt sein. Die Autofeedvorrichtung ist vorzugsweise dazu eingerichtet, eine Vorwärtsbewegung des Bohrgeräts (3) zu bewirken bzw. einen Vorschub zu erzeugen, der auf das Bohrgerät (3) übertragen werden kann. Da der Istwert (2) der Reibung kleiner ist als der Referenzwert (1), ist in diesen Fällen eine Steuerung bzw. Regelung der Bewegung des Bohrgeräts (3) leicht möglich und wird auch von konventionell arbeitenden Bohrsystem gut bewältigt.

Erschwert ist die Steuerung bzw. Regelung der Bewegung des Bohrgeräts (3) in den Anwendungsfällen, die beispielhaft und schematisch in Fig. 2 dargestellt werden. In der in Fig. 2 dargestellten Situation soll ein Bohrvorgang in einem bestehenden Bohrloch (5) gestartet werden, wie es aus dem Stand der Technik bekannt ist. Das bedeutet, dass sich die Bohrkrone des Bohrgeräts (3) zu Beginn des Bohrvorgangs bereits in dem bestehenden Bohrloch (5) befindet. In der in Fig. 2 dargestellten Arbeitssituation des Bohrgeräts (3) ist das Referenzmoment (1) kleiner als das Reibmoment (2). Das hohe Reibmoment (2) ist insbesondere auf die in dem bestehenden Bohrloch (5) vorliegende Wandreibung zurückzuführen, d.h. auf den Widerstand, den die Bohrkrone bei ihrer Rotationsbewegung innerhalb des Bohrlochs (5) überwinden muss, um Beton abzubauen bzw. den Betonkern aus dem Untergrund (4) herauszuschneiden. Durch das vorgeschlagene Verfahren kann das Anbohren in einem bestehenden Bohrloch (5) wesentlich erleichtert werden.

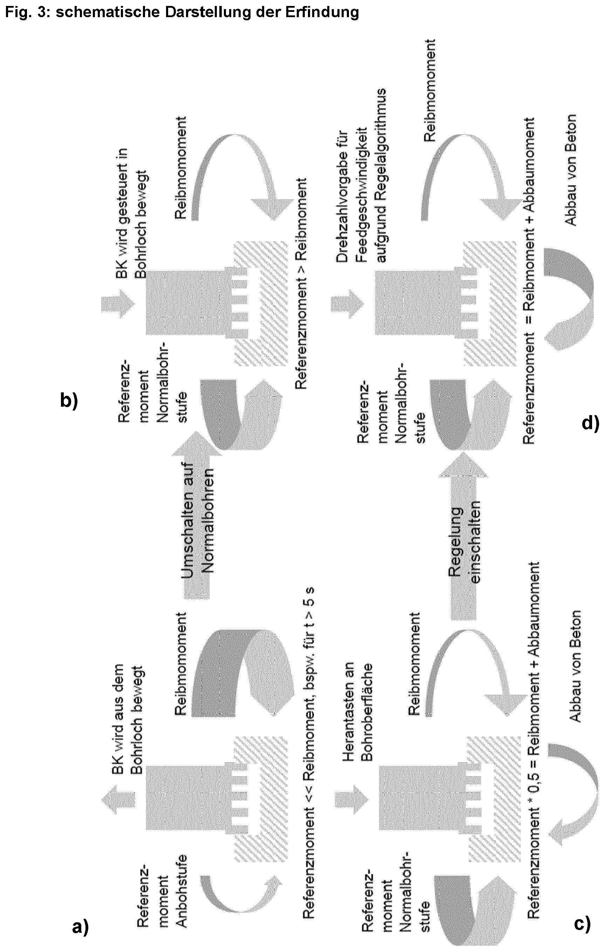

Eine mögliche Ausgestaltung des vorgeschlagenen Verfahrens und der Erfindung wird schematische in Fig. 3 darstellt. Insbesondere zeigt Fig. 3 einen möglichen Ablauf eines Bohrvorgangs in einem bestehenden Bohrloch (5).

Fig. 3 setzt sich aus vier einzelnen Arbeitssituationen zusammen, die ausgehend von der Teilabbildung a) oben links im Bild mit den Bezeichnungen a) bis d) bezeichnet werden. Mittig in den Teilabbildungen ist jeweils die Bohrkrone eines Bohrgeräts (3) dargestellt, die einen Bohrvorgang in einem bestehenden Bohrloch (5) fortsetzen soll. In Teilabbildung a) ist das Referenzmoment (1), das in den Teilabbildungen jeweils auf der linken Seite von der Bohrkrone dargestellt wird, deutlich kleiner als das Reibmoment (2) bzw. der gemessene Istwert (2) für die Reibung der Bohrkrone in dem Bohrloch (5). Dieser Zustand kann gemäß dem in Fig. 3a) dargestellten Beispiel länger als eine Zeitspanne t von 5 s andauern. In dieser Situation wird bei einem konventionell arbeitenden Bohrsystem aus Bohrgerät (3) und Autofeedvorrichtung (nicht dargestellt) die Autofeedvorrichtung häufig dafür sorgen, dass die Bohrkrone aufgrund der hohen Wandreibung innerhalb des Bohrlochs (5) aus dem Bohrloch herausbewegt wird. Diese Bewegung der Bohrkrone wird in Teilabbildung 3a) durch den Pfeil nach oben dargestellt. Die in Teilabbildung 3a) dargestellte Situation kann auch als Anbohrstufe bezeichnet werden.

Das Bohrsystem kann dann auf einen normalen Bohrbetrieb umschalten, wobei ein normaler Bohrbetrieb beispielsweise so ablaufen kann, wie bei einem Bohren auf einem im Wesentlichen planen oder ebenen Untergrund (4). Nach dem Umschalten auf das Normalbohren kann eine Bohrsituation gemäß Teilabbildung 3b) vorliegen (siehe Fig. 3 oben rechts). In dieser "Normalbohrstufe" wird ein Reibmoment (2) als Meßgröße ermittelt, das deutlich kleiner ist als der im Bohrsystem hinterlegte Referenzwert (1). Mit anderen Worten ist das Referenzmoment (1) größer als das Reibmoment (2). Als Reaktion auf die gemessenen Reibungs-Istwerte (2) kann die Bohrkrone des Bohrgeräts (3) in das Bohrloch (5) hineingefahren werden. Diese Bewegung des Bohrgeräts (3) wird vorzugsweise von der Autofeedvorrichtung des Bohrgeräts (3) bewirkt bzw. gesteuert.

In Teilabbildung 3c) wird ein Herantasten der Bohrkrone des Bohrgeräts (3) an eine Bohroberfläche, d.h. den zu bearbeitenden Untergrund (4), dargestellt. Insbesondere zeigt auch die Teilabbildung 3c) eine Arbeitssituation in einer Normalbohrstufe des Bohrsystems. In dem in Teilabbildung 3c) dargestellten Beispiel ist das Referenzmoment (1) größer als das Reibmoment (2), das vorzugsweise dem tatsächlich gemessenen Istwert (2) der Reibung entspricht. Insbesondere kann das Reibmoment (2) zusammen mit einem Abbaumoment (ohne Bezugszeichen) der Hälfte des Referenzmoments (1) entsprechen. In dieser Situation ist vorteilhafterweise ein Abbau von Beton und somit ein Arbeitsfortschritt möglich.

Ein Übergang zu einer Situation gemäß Teilabbildung 3d) wird durch ein Einschalten der Regelung ermöglicht. Auch bei der in Teilabbildung 3d) dargestellten Arbeitssituation liegt das Bohrsystem in einer Normalbohrstufe vor. In der in Teilabbildung 3d) abgebildeten Arbeitssituation ist das Referenzmoment (1) größer als das Reibmoment (2). Insbesondere kann der Referenzwert (1) in dieser Situation der Summe aus Reibungsmoment (2) und Abbaumoment entsprechen. Auch in dieser Situation kann ein Arbeitsfortschritt durch einen Abbau von Beton erreicht werden. Die eingeschaltete Regelung sorgt durch Anwendung eines Regelalgorithmus dafür, dass das Bohrsystem eine Vorgabe für die Drehzahl der Feedgeschwindigkeit erhält. Mit anderen Worten kann das Bohrsystem eine Drehzahlvorgabe für die Geschwindigkeit des Feedmotors der Autofeedvorrichtung erhalten.

### Bezugszeichenliste

- 1: Referenzmoment
- 2: Reib(ungs)moment
- 3: Bohrgerät bzw. Bohrkrone des Bohrgeräts
- 4: Untergrund
- 5: bestehendes Bohrloch

- BK: Bohrkrone

## Patentansprüche

1. Verfahren zum verbesserten Anbohren mit einem Bohrgerät (3) in einem bestehenden Bohrloch (5), wobei das Bohrgerät (3) eine Autofeedvorrichtung zur Erzeugung eines Vorschubs für das Bohrgerät (3) umfasst und wobei das Bohrgerät (3) in einem ersten und in einem zweiten Betriebszustand betrieben werden kann,
**gekennzeichnet durch die folgenden Verfahrensschritte:**
a) Bereitstellung des Bohrgeräts (3), wobei in dem Bohrgerät (3) ein Referenzwert (1) für ein Drehmoment bei einem Betrieb des Bohrgeräts (3) in dem ersten Betriebszustand hinterlegt ist,
b) Betrieb des Bohrgeräts (3) im ersten Betriebszustand,
c) Ermittlung eines Istwerts (2) für die Reibung der Bohrkrone des Bohrgeräts in dem bestehenden Bohrloch,
d) Vergleich des Istwerts (2) mit dem Referenzwert (1),
e) Ermittlung einer Bewegungsrichtung des Bohrgeräts (3) in dem bestehenden Bohrloch (5), wobei die Bewegungsrichtung des Bohrgeräts (3) von der Autofeedvorrichtung vorgegeben wird,
f) Beendigung des ersten Betriebszustands, wenn der Istwert (2) höher ist als der Referenzwert (1) und wenn die Bewegungsrichtung des Bohrgeräts (3) negativ ist.

2. Verfahren nach Anspruch 1,
**dadurch gekennzeichnet, dass**
das Verfahren den zusätzlichen Verfahrensschritt umfasst, dass nach Beendigung der ersten Betriebszustands das Bohrgerät (3) tiefer in das Bohrloch (5) hineingefahren wird.

3. Verfahren nach Anspruch 2,
**dadurch gekennzeichnet, dass**
das Einfahren des Bohrgeräts (3) in das Bohrloch (5) mit einer konstanten Drehzahl eines Motors der Autofeedvorrichtung erfolgt.

4. Verfahren nach Anspruch 2,
**dadurch gekennzeichnet, dass**
das Einfahren des Bohrgeräts (3) in das Bohrloch (5) mit einer konstanten Vorschubgeschwindigkeit erfolgt.

5. Verfahren nach Anspruch 3 oder 4,
**dadurch gekennzeichnet, dass**
in einem weiteren Vergleich Istwert (2) und Referenzwert (1) miteinander verglichen werden, wobei bei einem vordefinierten Verhältnis von Istwert (2) zu Referenzwert (1) der Bohrvorgang im zweiten Betriebszustand fortgesetzt wird.

6. Verfahren nach einem der vorhergehenden Ansprüche
**dadurch gekennzeichnet, dass**
der erste Betriebszustand beendet wird, wenn der Istwert (2) für eine vordefinierte Zeitspanne t höher ist als der Referenzwert (1).

7. Bohrsystem umfassend ein Bohrgerät (3) und eine Autofeedvorrichtung zur Erzeugung eines Vorschubs für das Bohrgerät (3), wobei das Bohrgerät (3) in einem ersten und in einem zweiten Betriebszustand betreibbar ist,
**dadurch gekennzeichnet, dass**
das System dazu ausgestaltet ist, dass eine Umstellung zwischen dem ersten Betriebszustand und dem zweiten Betriebszustand durch einen Vergleich zwischen einem Istwert (2) eines Reibungsmoments und einem Referenzwert (1) in Verbindung mit einer Ermittlung einer Bewegungsrichtung des Bohrgeräts (3) erfolgt.

8. Bohrsystem nach Anspruch 7,
**dadurch gekennzeichnet, dass**
der erste Betriebszustand dann beendet wird, wenn der Istwert (2) höher ist als der Referenzwert (1) und wenn die Bewegungsrichtung des Bohrgeräts (3) negativ ist.
